# EUROPÄISCHE PATENTSCHRIFT

(11) **EP 3 325 567 B1**
(45) Veröffentlichungstag und Bekanntmachung des Hinweises auf die Patenterteilung: **27.10.2021**
(21) Anmeldenummer: 16739100.2
(22) Anmeldetag: 14.07.2016
(51) Int. Cl.: C09J 7/29

(54) **VERWENDUNG EINES KLEBEBANDS IN EINEM VERFAHREN ZUM FORMEN EINES KÖRPERS IN EINER FORM**
USE OF AN ADHESIVE TAPE IN A METHOD FOR MOLDING A BODY IN A MOLD
UTILISATION D'UN RUBAN ADHÉSIF DANS UN PROCÉDÉ DE MOULAGE D'UN CORPS DANS UN MOULE

(30) Priorität: 17.07.2015 DE 102015213507
(43) Veröffentlichungstag der Anmeldung: 30.05.2018
(73) Patentinhaber: tesa SE, 22848 Norderstedt (DE)
(72) Erfinder: BERNT, Stephan, 22529 Hamburg (DE); KEREP, Patrick, 22767 Hamburg (DE)
(74) Vertreter: tesa SE
(86) Internationale Anmeldenummer: PCT/EP2016/066703
(87) Internationale Veröffentlichungsnummer: WO 2017/012962

(56) Entgegenhaltungen:
- WO-A1-2013/181431
- US-A1- 2015 072 580

## Beschreibung

Die vorliegende Erfindung betrifft die Verwendung eines Klebebandes in einem Verfahren zum Formen eines Körpers in einer Form, bei dem aus mehreren härtbaren Materialschichten ein Körper geformt wird, insbesondere ein Halbflügel eines Rotors, der in einer Windkraftanlage verbaut ist.

Viele Bauteile, teilweise mit komplexen geometrischen Strukturen, werden hergestellt, indem aushärtbares Material wie zum Beispiel Epoxid- oder Polyesterharze in eine Form eingebracht wird, was anschließend ausgehärtet wird.

Beispiele für solche Prozesse sind RTM (Resin Transfer Moulding) und VRTM (Vacuum-Assisted Resin Transfer Moulding). Das Resin Transfer Moulding ist ein Verfahren zur Herstellung von Formteilen aus Duroplasten und Elastomeren. Im Vergleich zum Pressen wird hierbei die Formmasse mittels Kolben von einer meist beheizten Vorkammer über Verteilerkanäle in das Formnest eingespritzt, worin sie unter Wärme und Druck aushärtet. Als Formmasse können Formaldehydharze (Phenolharze oder Aminoplaste) und Reaktionsharze (Polyester wie PET oder Epoxidharze) mit kleinen Füllstoffpartikeln und Elastomere verwendet werden.

Zu Beginn eines Zyklus befindet sich eine vorplastifizierte und dosierte Formmasse in der Vorkammer. Zunächst wird das Werkzeug geschlossen. Danach wird die Formmasse ins Werkzeug eingespritzt und für eine bestimmte Zeit im Werkzeug belassen. Bei dieser sogenannten Verweilzeit kommt es zum Reagieren oder Vulkanisieren der Formmasse. Sie ist dabei von verschiedenen Faktoren abhängig (Harztyp, Füllstoff, Verarbeitungsdruck und -temperatur). Ist die Verweilzeit beendet, kann das Werkzeug geöffnet werden. Die zuvor eingefüllte Formmasse ist nun fest (ausgehärtet) und wird jetzt als Formteil bezeichnet. Dieses kann nun aus dem Werkzeug entformt werden. Danach erfolgt die Reinigung des Werkzeugs und ein neuer Zyklus kann beginnen.
Die Menge der beim Einpressen und Nachpressen benötigen Formmasse sollte dabei immer größer als das Volumen des endgültigen Formteil sein, damit das Werkzeug vollständig befüllt wird. Somit wird garantiert, dass das Formteil vollständig ausgebildet ist und keine Luft eingepresst wird. Die dabei in der Vorkammer überschüssige, zurückgebliebene Formmasse, auch als Restkuchen bezeichnet, muss vor dem Beginn des neuen Zyklus entfernt werden und durch neue Formmasse ersetzt werden.
Um Lufteinschlüsse zu vermeiden, wird meist zusätzlich die Kavität (Formhohlraum) evakuiert.

Um auch lange Fasern oder Faserhalbzeuge (Prewovens/Preform) zu verarbeiten, werden diese zuvor in das Werkzeug eingelegt und mit der Formmasse umspritzt. Auch hier wird vorteilhafterweise meist zusätzlich die Kavität (Formhohlraum) evakuiert.
Die "Prewovens-Verfahren" lassen sich nach Anzahl und Gestaltung der Harzangüsse einteilen. Im Folgenden wird der Eintrag des Harzes in das Faser-Halbzeug als Injektion bezeichnet, unabhängig davon auf welche Weise der Druckgradient erzeugt wird.
- Punktinjektion: Das Harz wird nur an einer Stelle in das Halbzeug injiziert. Beim Punktanguss kann die Fließfront Luft einschließen, was zu Fehlstellen führt.
- Mehrpunktinjektion: Durch mehrere Injektionsstellen kann die Form schneller mit Harz gefüllt werden. Der Einschluss von Luft kann durch geschickte Positionierung verhindert werden.
- Linien-Injektion: Bei der Linieninjektion wird nicht an einer punktförmigen Stelle injiziert sondern linienhaft am Rand der Form. Dies kann bei Bauteilen mit großer Streckung von Vorteil sein, da nur die kürzere Kantenlänge durchströmt werden muss.
- Fließkanal-Injektion: Das Harz wird durch einen breiten Kanal injiziert, der über oder unter dem Faser-Halbzeug liegt.
- Kaskaden-Injektion: Um den Druckgradienten gering zu halten, werden mehrere Injektionsstellen in Richtung der Fließfront angebracht. Es ist dazu jedoch notwendig, die Injektionsleitungen der Fließfront folgend zu öffnen und zu schließen.

Als Formarten sind feste Formen, weiche Formen und Mischformen bekannt.

Als Injektionsharze werden Harze verwendet, die eine niedrige Viskosität besitzen. Dadurch bleibt der Strömungswiderstand beim Durchströmen der Form gering, und es sind kleinere Druckdifferenzen zum Füllen notwendig. Reaktionsharze für RTM-Verfahren werden als spezielle Injektionsharze angeboten, die aus einer Harz- und Härterkomponente bestehen. Niedrigreaktive Harzsysteme können bereits vor der Infusion gemischt werden. Sollen hochreaktive Harzsysteme verwendet werden, so können Harz und Härter erst unmittelbar in der Infusionsleitung beziehungsweise der Form gemischt werden. Auf diese Weise sind geringere Taktzeiten möglich. Verfahren, bei denen die Injektionsharz-Komponenten erst unmittelbar vor der Injektion gemischt werden, sind als RIM-Verfahren (Reaction Injection Moulding) bekannt.

Weitere Details lassen sich dem Chemielexikon Römpp entnehmen, und zwar unter dem Stichwort "Spritzgießen" (2013 Georg Thieme Verlag, Dokumentkennung RD-19-03499, letzte Aktualisierung: Juli 2011).

Zum Aufbau eines Körpers, beispielsweise dem (Halb-)Flügel eines Rotors, der in einer Windkraftanlage verbaut ist, werden Glasfasermatten verwendet, die als Teilschichten in eine geeignet gestaltete Form eingebracht werden. Anschließend werden die Schichten mit einem Harz verklebt und in der Form gehärtet, um ein faserverstärktes Polymer oder einen glasfaserverstärkten Kunststoff zu ergeben.

Um ein einfaches und zerstörungsfreies Entformen zu gewährleisten, muss die Form, die den Negativ- und gegebenenfalls auch den Positivabdruck des zu bauenden Teils darstellt, mit einem anti-adhäsiven Material präpariert werden, das vor dem Aufbau der Schichten auf die Form aufgetragen wird.

Dazu werden häufig Trennmittel eingesetzt wie Polyvinylalkohol oder Silikonwachse. Bekannt sind auch Trennmittel auf Silan- oder Siloxanbasis, beispielsweise die Produkte aus der Frekote-Serie der Firma Henkel. Des Weiteren wird PTFE-beschichtetes Glasfasergewebe eingesetzt, das in Form eines Klebebandes auf die Form aufgebracht wird und das Trennmittel ersetzt.

Das Trennmittel ist in einer gleichmäßigen Schicht aufgebracht werden, und diese Schicht muss absolut glatt sein, damit die äußere Oberfläche des Körpers ebenfalls glatt ist.

Die üblich eingesetzten flüssigen Trennmittel sind Lösungsmittel basiert und bedürfen einer Trocken- und Aushärtezeit von jeweils 20 bis 30 min. Die Applikation des Trennmittels dauert ebenfalls 20 bis 30 min.
Da je nach Anwender vor jedem Bauzyklus erneut mit Trennmittel ausgerüstet wird, entsteht dadurch insgesamt eine Totzeit von 1,5 h vor jedem Bauzyklus.

Als weiterer Nachteil ist zu nennen, dass die Trennmittel sich teilweise auf das Bauteil übertragen, was eine direkte anschließende Weiterverarbeitung zum Beispiel durch Lackieren erschwert. Das Trennmittel muss erst entfernt werden, was ebenfalls Zeit in Anspruch nimmt.

Weiterhin ist bekannt, dass die Trennwirkung solcher Trennmittel nicht 100 %ig ist. Aufgrund der Tatsache, dass das Harz direkten Kontakt zur Form hat, lagert sich dadurch nach jedem weiteren Entformungszyklus an einigen Stellen eine geringe Menge Harz ab. Dieser Effekt summiert sich so stark, dass die Form je nach Schweregrad nach 200 Zyklen abgeschliffen und poliert werden muss, da sonst die Passgenauigkeit der entformten Bauteile nicht mehr gegeben ist.

Einige der verwendeten Trennmittel basieren auf organischen Lösungsmitteln, welche beim Trocknen verdunsten und die Umgebungsluft belasten. In bestimmten Fällen müssen dafür extra Sicherheitsvorkehrungen getroffen werden, um die Brand- oder Explosionsgefahr zu minimieren.

Eine wenig verbreitete Alternative besteht darin, die Bauteilform mit PTFE beschichteten Glasfasergewebeklebebändern auszukleiden. Diese müssen je nach Qualität weniger oft ausgetauscht werden und bieten eine gute Trennwirkung. Das spart vor allem Zeit, die für weitere Produktionszyklen genutzt werden kann.

Nachteilig ist der Applikationsprozess des Glasfasergewebeklebebands in der dreidimensionalen Form, weil darauf geachtet werden muss, dass so wenig wie möglich Unregelmäßigkeiten wie Luftblasen unter dem Klebeband, überlappende Klebebandkanten oder Falten erzeugt werden.
Dies wird enorm erschwert durch die Steifigkeit und die fehlende Flexibilität des PTFE behandelten Glasfasergewebeträgers.

Bei der Herstellung eines PTFE beschichteten Glasfasergewebes wird üblicherweise ein sehr breiter Ballen Glasfasergewebe auf der Ober- und der Unterseite mit PTFE benetzt und später in viele Rollen mit der gewünschten Breite aufgeschnitten. Dadurch ist an den Schnittkanten der Rollen kein PTFE. Dies wiederum hat zur Folge, dass sich das Glasfasergewebe und damit das Klebeband in der Form mit Flüssigharz vollsaugen und somit die Trennwirkung beziehungsweise die Zahl der Zyklen bis zum kompletten Austausch des Tapes reduziert wird.

Es gibt große qualitative Unterschiede zwischen den PTFE-behandelten Glasfasergewebeträgern. Kaum zu verhindern sind sogenannte Mikrorisse in der PTFE-Schicht, in die Harz eindringen kann. Je nach Qualität treten diese Risse mehr oder weniger häufig auf. Diese fahren dazu, dass sich das Klebeband in der Mitte mit Harz vollsaugt, was wie im vorigen Absatz beschrieben, zu einer Reduktion der Lebenszeit führt.

Weiterhin lässt sich nicht verhindern, dass das Glasfasergewebe (so wie jedes Gewebe) an den Schnittkanten ausfranzt und einzelne Fasern in die Form stehen. Wenn das Bauteil entformt wird, führt das dazu, dass die Faser und teilweise das Klebeband mit herausgerissen werden. Eine einmal herbeigeführte Verletzung dieser Art vergrößert sich entsprechend schnell, so dass die entstehende Lücke geflickt werden muss. Die neu entstandenen Kanten sind ebenfalls empfindlich, so dass dies ein sich selbstverschlechternden Prozess darstellt.

Somit verliert auch ein mit PTFE beschichtetes Glasfasergewebeklebeband nach und nach seine Trennwirkung, so dass dieses nach zum Beispiel 30 Entformungen ausgetauscht werden muss.

Die WO 2013/181431 A1 offenbart elastomermodifizierte Perfluorpolymermaterialien und insbesondere die Verwendung eines modifizierten Perfluorpolymermaterials als Gewebebeschichtung oder als Film, so dass eine Haftschicht auf dem modifizierten Perfluorpolymermaterial abgeschieden werden kann.
Die Verwendung des Klebebands in einem Verfahren zum Formen eines Körpers in einer Form wird hingegen nicht beschrieben.

Aufgabe der vorliegenden Erfindung ist, ein Klebeband für ein Verfahren zum Formen eines Körpers in einer Form zur Verfügung zu stellen, das die oben geschilderten Nachteile nicht aufweist, das insbesondere einen Träger aufweist, der sich nicht mit Harz vollsaugen kann und der nicht ausfranst, und das demgemäß vorteilhaft in dem Verfahren zum Formen eines Körpers aus aushärtbaren Materialschichten in einer Form Verwendung finden kann.

Gelöst wird diese Aufgabe durch die Verwendung eines Klebebands, wie es im Hauptanspruch niedergelegt ist. Gegenstand der Unteransprüche sind vorteilhafte Weiterentwicklungen des Erfindungsgegenstandes.

Demgemäß betrifft die Erfindung die Verwendung eines Klebebands mit einem Trägermetarial in einem Verfahren zum Formen eines Körpers in einer Form, umfassend die folgenden Schritte:
- Aufbringen des Klebebands auf der Innenseite einer Form
- Verteilen der den Körper bildende Materialschichten auf dem Klebeband
- Aushärtung der Materialschichten
- Entfernen des Körpers aus der Form
- wobei das Klebeband ein Trägermaterial aufweist, umfassend die folgenden Schichten: ein mit Fluorpolymeren oder Silikonpolymeren beschichtetes Textil aus Fasern mit einem Erweichungspunkt größer/gleich 200 °C, vorzugsweise 250 °C,
- auf dessen obere Seite vollflächig eine erste Folie aus Fluorpolymeren aufgebracht ist und
- auf dessen untere Seite vollflächig eine zweite Folie aufgebracht ist,
wobei auf das Trägermaterial einseitig eine Klebemasse, insbesondere Selbstklebemasse ausgebracht ist.

Bevorzugt ist das Textil ein Gelege oder besonders bevorzugt ein Gewebe.
Als Fasern finden insbesondere Kohlenstoff- oder Glasfasern Verwendung.
Besonders bevorzugt ist ein Glasfasergewebe.
Besonders bevorzugt sind Fluorpolymere zur Beschichtung.
Besonders bevorzugt ist insbesondere ein mit Fluorpolymeren beschichtetes Glasfasergewebe.

Die Beschichtung des Textils, vorzugsweise Glasfasergewebes mit Fluorpolymeren erfolgt vorteilhaft nach einem Verfahren, das dem Fachmann als Dip-Coating-Prozess (Tauchbeschichtung) bekannt ist.
Danach wird ein Textils/Glasfasergewebe durch eine Fluorpolymer-Dispersion, insbesondere PTFE-Dispersion gezogen wird, welche anschließend gesintert wird. Durch mehrmaliges Durchfahren dieser Dispersion kann die Fluorpolymerdicke erhöht und damit die Qualität des Materials verbessert werden.

Gemäß einer bevorzugten Ausführungsform der Erfindung sind die Fäden des Textil/Glasfasergewebes mit Fluorpolymeren in einer Dicke von 2 µm bis 50 µm, vorzugsweise 15 bis 25 µm überzogen.

Das bevorzugte Glasfasergewebe der Trägerschicht weist vorteilhaft folgende Eigenschaften auf:
Das Flächengewicht beträgt von 30 bis 120 g/m², bevorzugt von 80 bis 120 g/m².
Die Anzahl der Fäden in Längs- und Querrichtung beträgt jeweils 5 bis 50, vorzugsweise 10 bis 20 Fäden/cm, weiter vorzugsweise 15 Fäden/cm.
Die zur Bildung des Glasfasergewebes verwendeten Fäden weisen einen Titer von 150 bis 1000 dtex, vorzugsweise 200 bis 500 dtex auf.
Gemäß einer besonders bevorzugten Ausführungsform sind alle drei Merkmale gleichzeitig verwirklicht.

Als Fluorpolymere oder fluorhaltige Polymere werden im Rahmen dieser Erfindung sowie allgemein sowohl fluorhaltige Polymere mit ausschließlich Kohlenstoffatomen als auch solche mit Heteroatomen in der Hauptkette bezeichnet. Vertreter der ersten Gruppe sind Homo- und Copolymere olefinisch-ungesättigter fluorierter Monomeren.

Die Einteilung der aus diesen Monomeren resultierenden Fluorpolymere erfolgt in die Kategorien Polytetrafluorethylen, Fluorthermoplaste, Fluorkautschuke und die daraus durch Vulkanisation gewonnenen Fluorelastomere. Wichtigste Vertreter der Fluorpolymere mit Heteroatomen in der Hauptkette sind die Polyfluorsiloxane und Polyfluoralkoxyphosphazene.

Vorzugsweise enthält die erste Folie zu 50 Gew.-%, weiter vorzugsweise zu 75 Gew.-%, besonders vorzugsweise zu 90 Gew.-%, ganz besonders vorzugsweise zu 95 Gew.-% ein oder mindestens zwei Fluorpolymere (jeweils bezogen auf die Gesamtzusammensetzung der ersten Folie).
Weiter vorzugsweise bestehen die die erste Folie bildenden Polymere zu 100 Gew.-% aus einem oder mindestens zweien Fluorpolymeren. Den Fluorpolymeren können zusätzlich optional die später geschilderten Additive zugesetzt sein. Letztere sind - wie gesagt - nicht zwingend, sondern können auch nicht verwendet werden.

Als Fluorpolymere sind insbesondere PTFE (Polytetrafluorethylen), ETFE (Poly(ethylen-co-tetrafluoroethylen)), FEP (Poly(tetrafluorethylen-co-hexafluorpropylen)), PVDF (Poly(1,1-difluorethen)) oder PFA (Perfluoralkoxy-Polymere) geeignet oder Gemische aus zwei oder mehreren der genannten Fluorpolymere.

PTFE bezeichnet Fluorpolymere, die aus Tetrafluorethen-Monomeren zusammengesetzt sind.
ETFE ist ein fluoriertes Copolymer bestehend aus den Monomeren Chlortrifluorethylen oder auch Tetrafluorethylen und Ethylen.
FEP, auch fluoriertes Ethylen-Propylen-Copolymer genannt, bezeichnet Copolymere aus Tetrafluorethen und Hexafluorpropen.
PVDF bezeichnet aus 1,1-Difluorethen (Vinylidenfluorid) herstellbare Fluorpolymere. PFA bezeichnet Copolymere mit Gruppierungen wie 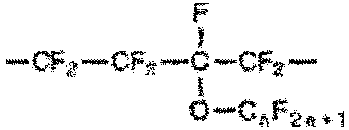 als Grundeinheiten [Poly(tetrafluorethylen-co-perfluoralkylvinylether)]. PFA resultieren aus der Copolymerisation von Tetrafluorethen und Perfluoralkoxyvinylethern (zum Beispiel Perfluorvinylpropylether, *n* = 3).

Die Fluorpolymere können mit weiteren Polymeren vermischt sein, wobei eine gute Mischbarkeit der Fluorpolymere mit den anderen Polymeren gegeben sein muss.
Geeignete Polymere sind olefinische Polymere wie Homo- oder Copolymere von Olefinen wie Ethylen, Propylen oder Butylen (der Begriff Copolymer ist hier sinngemäß dahingehend zu verstehen, dass er Terpolymere mit einschließt), Polypropylenhomopolymere oder Polypropylencopolymere einschließlich der Block-(Impact-) und Randompolymere.

Weitere Polymere können allein oder in Mischung aus der Gruppe der Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide ausgewählt werden.

Die Polymere zur Bildung der ersten Folie können in Reinform oder in Blends mit Additiven wie Antioxidantien, Lichtschutzmitteln, Antiblockmitteln, Gleit- und Verarbeitungshilfsmitteln, Füllstoffen, Farbstoffen, Pigmenten Treib- oder Nucleierungsmitteln vorliegen.
Vorzugsweise weist die erste Folie keines der genannten Additive auf.

Gemäß einer bevorzugten Ausführungsform der Erfindung enthält die zweite Folie ebenfalls Fluorpolymere in den oben erwähnten Grenzen (zu 50 Gew.-%, weiter vorzugsweise zu 75 Gew.-%, besonders vorzugsweise zu 90 Gew.-%, ganz besonders vorzugsweise zu 95 Gew.-% ein oder mindestens zwei Fluorpolymere (jeweils bezogen auf die Gesamtzusammensetzung der zweiten Folie).

Weiterhin vorzugsweise weisen die erste und die zweite Folie die identische, auf Fluorpolymeren basierende Zusammensetzung auf.

Die zweite Folie kann auch aus anderen Polymeren bestehen, zum Beispiel Polyolefine wie PE und PP oder Polyester wie PET oder Polyimide oder PA oder PVC oder aus einem anderen, der oben erwähnten Polymere.
Die Polymere sind so zu wählen, dass zum einen die Klebemasse gut darauf verankert werden kann und zum anderen die Folie eine feste Laminationsverbindung mit dem mit Fluorpolymeren beschichteten Glasfasergewebe eingeht.

Besonders vorteilhaft sind die erste und die zweite Folie auf das Glasfasergewebe laminiert, um das Trägermaterial zu bilden.

Der Laminationsvorgang kann derart erfolgen, dass entweder die Folien heiß miteinander verschweißt/verschmolzen werden und so eine Verbindung eingehen oder aber mittels eines Laminationsklebstoffs.

Wird beispielsweise eine PTFE-Folie auf ein PTFE-beschichtetes Glasfasergewebe laminiert, so ist bekannt, dass beispielsweise FEP zum Verschweißen von PTFE verwendet werden kann. Auch andere thermoplastisch verarbeitbare Fluorpolymere (wie ETFE, ECTFE, PVDF, etc.) könnten hierzu benutzt werden oder dem Fachmann bekannte Laminierklebstoffe.

Es muss nur sichergestellt werden, dass bei mechanischer Belastung die Laminationsstelle nicht aufreißt

Gemäß einer bevorzugten Ausführungsform können die erste und/oder die zweite Folie aus einem zumindest zweischichtigen Laminat aus zwei oder mehr Folienlagen bestehen. Die äußerste Folienlage der ersten Folie, also die, die den Körper bildenden Materialschichten zugewandt ist, ist die ein oder mindestens zwei Fluorpolymere enthaltende Folie.

Gemäß einer bevorzugten Ausführungsform liegt die Dicke der ersten und/oder der zweiten Folie zwischen 15 und 350 µm, vorzugsweise zwischen 30 und 200 µm, weiter vorzugsweise zwischen 50 und 150 µm.
Vorzugsweise sind beide Folien zwischen 15 und 350 µm, weiter vorzugsweise zwischen 30 und 200 µm dick.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar.

Bevorzugt werden Klebemassen, die auf Acrylat oder Silikon basieren.

Die Klebemasse kann aus der Gruppe der Naturkautschuke oder der Synthesekautschuke oder aus einem beliebigen Blend aus Naturkautschuken und/oder Synthesekautschuken gewählt werden, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Ethylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.
Daneben hat sich ein 100%-System auf Styrol-Isopren-Styrol (SIS) als geeignet erwiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharzoder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal®, insbesondere Acronal® DS 3458 oder AC Resin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder ß-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.
Auf die Darstellung des Wissensstandes im "Handbook of Pressure Sensitive Adhesive Technology" von Donatas Satas (van Nostrand, 1989) sei ausdrücklich hingewiesen.

Geeignete Füllstoffe und Pigmente sind beispielsweise Ruß, Titandioxid, Calciumcarbonat, Zinkcarbonat, Zinkoxid, Silicate oder Kieselsäure.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Die Verankerung ist üblicherweise so stark, dass ein solches Klebeband problemlos von einer Rolle abgewickelt werden kann, ohne dass die Verankerung der Klebemasse reißt und es zum so genannten Umspulen der Klebemasse kommt (die Klebemasse befindet sich dann auf der Rückseite des Trägers). Des Weiteren wird von den meisten Haftklebebändern erwartet, dass diese vom Untergrund wieder abgelöst werden können, also möglichst spurlos wieder aufgenommen werden können. Das heißt, das Klebeband darf nicht zwischen Träger und Klebemasse adhäsiv brechen.

Gemäß einer bevorzugten Ausführungsform liegt der Masseauftrag der Klebemasse auf dem Trägermaterial zwischen 10 und 200 g/m²; vorzugsweise zwischen 20 und 100 g/m², besonders vorzugsweise zwischen 30 und 75 g/m².

Als Materialschichten zur Bildung des Formteils wird insbesondere Fasermaterial (wie zum Beispiel GFK (glasfaserverstärkter Kunststoff), CFK (kohlenstofffaserverstärkter Kunststoff) oder Prepreg und so weiter) verwendet.
Prepeg bezeichnet ein Halbzeug, bestehend aus Endlosfasern und einer ungehärteten duroplastischen Kunststoffmatrix, das vor allem im Leichtbau Verwendung findet. Die Endlosfasern können als reine unidirektionale Schicht, als Gewebe oder Gelege vorliegen.

Zur Erhöhung der Adhäsion zwischen der Klebemasse und dem Trägermaterial oder zwischen Trennlack und Trägermaterial kann das Trägermaterial zur Erhöhung der Oberflächenenergie einer Coronabehandlung unterzogen werden.
Vorteilhaft ist die Verwendung einer Primerschicht zwischen den Folien und Klebmasse zur Verbesserung der Haftung der Klebmasse auf den Folien und somit der rückstandsfreien Wiederabziehbarkeit nach der Anwendung.
Des Weiteren ist ein Ätzen der Folien vorteilhaft, um die Klebemasse verankern zu können.

Beschreibungen der üblicherweise für Klebebänder verwendeten Klebmassen sowie Primern finden sich zum Beispiel im "Handbook of Pressure Sensitive Adhesive Technology" von Donatas Satas (van Nostrand, 1989).

Vorzugsweise ist die auf dem Trägermaterial aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden.
Als Trennmaterial eignet sich bevorzugt ein nicht-fusselndes Material wie eine Kunststofffolie oder ein gut verleimtes, langfaseriges Papier.
Die Klebebänder weisen insbesondere Lauflängen von 1000 bis 30.000 m auf. Als Breite der Rollen werden üblicherweise 10, 15, 19, 25 und 30 mm gewählt.

Durch das Aufbringen zweier Folien, zwischen denen sich das Glasfasergewebe befindet, wird verhindert, dass Mikrorisse, Cracks oder Pinholes in dem Fluorüberzug des Glasfasergewebes auftreten, die zu einem Versagen des Klebebandes versagen führen können. Es findet keine Harzpenetrationen in das Fasernetzwerk des Glasfasergewebes statt, und auch keine Einläufer in das Material an den Kanten.
Des Weiteren franst das Trägermaterial beziehungsweise das Klebeband aufgrund der Einbettung des Glasfasergewebes zwischen zwei Folien beim Schneiden nicht aus.

Ein folienartiger Träger, der vollständig oder zu mindestens 50 Gew.-% aus fluoriertem Polymer besteht zeigt nicht die oben beschriebenen Nachteile des Ausfransens. Auch die Steifigkeit eines solchen Klebebands ist viel niedriger, und es passt sich deshalb gut an die Form an. Das Trägermaterial zeigt eine gewisse Dehnbarkeit, die zusätzlich bei der Anpassung an die Form hilft.
Weiterhin ist die innere Festigkeit eines solchen Trägermaterials deutlich höher, so dass auch bei größeren auftretenden Kräften kein Abspalten von Tragerteilen zu beobachten ist.

Aufgrund der oben geschilderten Vorteile lässt sich das Klebeband hervorragend in einem Verfahren zum Formen eines Körpers in einer Form verwenden, umfassend die folgenden Schritte:
- Aufbringen eines Klebebands auf der Innenseite einer Form
- Verteilen der den Körper bildende Materialschichten auf dem Klebeband
- Aushärtung der Materialschichten
- Entfernen des Körpers aus der Form

Der Körper ist vorzugsweise ein Halbflügel eines Windrads.

Gemäß einer bevorzugten Variante des Verfahrens wird vor dem Aufbringen des Klebebands die Innenseite der Form mit einem Trennmittel ausgerüstet.

Weiter vorzugsweise erfolgt das Aushärten der Materialschichten unter Vakuum.

Die einzelnen Verfahrensschritte sind beispielsweise in der EP 2 388 131 A1 umfassender erläutert.

Im Folgenden wird die Erfindung anhand eines Beispiels näher erläutert, ohne auch hiermit dieselbe in irgendeiner Art und Weise einschränken zu wollen.

### Erweichungspunkt

Unter dem Erweichungspunkt versteht man die Temperatur (beziehungsweise den Temperaturbereich), bei dem amorphe oder teilkristalline Polymere vom glasigen, hartelastischen in einen weichen Zustand übergehen. Die Verminderung der Härte entsprechender Stoffe am Erweichungspunkt wird zum Beispiel dadurch deutlich, dass ein auf eine Stoffprobe unter Belastung aufgesetzter Körper bei Erreichen des Erweichungspunktes in diese eingedrückt wird. Der Erweichungspunkt liegt grundsätzlich oberhalb der Glasübergangstemperatur, bei den meisten Polymeren jedoch deutlich unterhalb der Temperatur, bei der diese vollständig in den flüssigen Zustand übergehen. Die Messung des Erweichungspunktes erfolgt nach der ASTM E28-99 (2009), die als Ring & Ball bekannt ist.

### Beispiel

- 50 g/m² Silikonklebemasse (zum Beispiel Dow Corning® Q2-7657)
- Träger, bestehend aus einem 60 µm dicken Glasfasergewebe, welches zunächst per Dip-Coating-Verfahren mit PTFE-Polymeren beschichtet wird, so dass sich eine Dicke des die Faser umgebenden Mantels von ungefähr 30 µm einstellt. Anschließend werden auf beide Seiten jeweils eine 30 µm starke CAST-Folie aus PTFE laminiert
- Aktivierung des Trägers (durch übliches Ätzverfahren)

### Gegenbeispiel

- 50 g/m² Silikonklebemasse (zum Beispiel Dow Corning® Q2-7406)
- Träger, bestehend aus einem 60 µm dicken Glasfasergewebe, welches zunächst per Dip-Coating-Verfahren mit PTFE-Polymeren beschichtet wird so dass sich eine Dicke des die Faser umgebenden Mantels von ungefähr 30 µm einstellt.
- Aktivierung des Trägers (durch übliches Ätzverfahren)

Das Klebeband gemäß Beispiel 1 lässt sich auch nach mehreren Entformungsschritten nahezu rückstandsfrei vom Untergrund ablösen und zeigte über die gesamte Zeit eine gute Trennwirkung.
Ein Eindringen des Harzes in den Träger ist ebenfalls nicht zu beobachten.

Im Fall des Gegenbeispiels beobachtet man beim Ablösen des Tapes ein Spalten des Trägers in z-Richtung, das heißt, der Träger spaltet in sich, und es bleibt eine teilweise Schicht PTFE auf der Oberfläche zurück, die sich nur schwer entfernen lässt. Weiterhin ist deutlich erkennbar, wie Harz in die Mikrorisse des Tapes eingedrungen ist und dunkle Flecken hinterlassen hat, welche dann zu den oben beschriebenen Problemen wie nachlassende Trennwirkung führen.

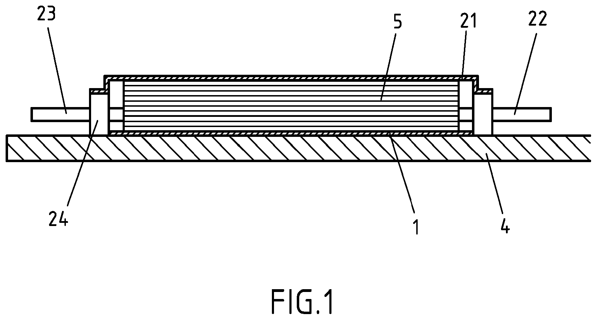

Die Klebebänder werden dazu in eine mit einem üblichen Trennmittel, zum Beispiel Frekote NC 44 (ein Trennmittel enthaltend eine Mischung aus Dibutylether und Polydimethylsiloxan (PDMS), was ein Gemisch aus vollständig methylierten linearen Siloxan-Polymeren mit endständigen Trimethylsiloxat-Einheiten ist) oder ME 143 der Firma Miller Stephenson (ein lösungsmittelbasierte Suspension von niedermolekularem PTFE) ausgerüstete Form eingeklebt. Entsprechend der Figur 1 werden mehrere Bauzyklen durchgeführt. Die Temperatur während des Aushärtens beträgt 100 bis 110 °C. Das Vakuum beträgt 0,1 bar. Es werden bis zu zehn Bauzyklen simuliert.

Im Folgenden soll das erfindungsgemäße Verfahren anhand mehrerer Figuren beispielhaft näher erläutert werden, ohne die Erfindung auf diese Ausführungsformen zu beschränken.

Es zeigen:
- Figur 1: die Anordnung der einzelnen Schichten in der Form im seitlichen Schnitt,
- Figur 2: die Anordnung der einzelnen Schichten in der Form von oben und
- Figur 3: einen vereinfachten Detailausschnitt der Figur 1.

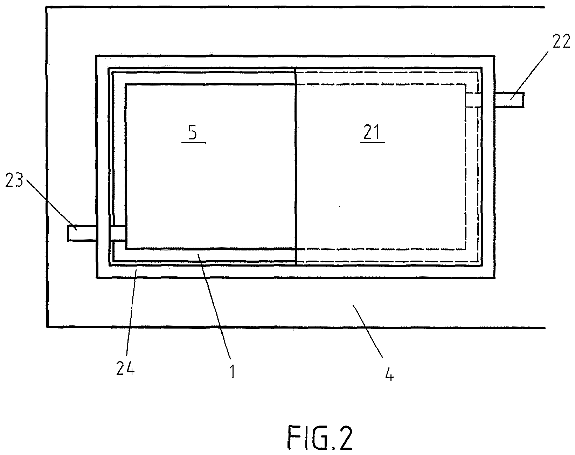

In der Figur 1 ist die Anordnung der einzelnen Schichten in der Form im seitlichen Schnitt dargestellt, in der Figur 2 von oben.
Die Form 4 wird mit einer sehr dünnen, wenige µm dicke Schicht eines Trennmittels 6, zum Beispiel einer lösungsmittelbasierten Suspension von niedermolekularem PTFE, ausgerüstet, deren Dicke in der Figur 1 nicht im richtigen Verhältnis gezeigt ist. Der Auftrag erfolgt mit einem Lappen. Danach trocknet die Suspension, woraus ein sehr dünner Film resultiert. Anschließend wird das Klebeband 1 in einer Lage auf der Innenseite der Form 4 aufgebracht.

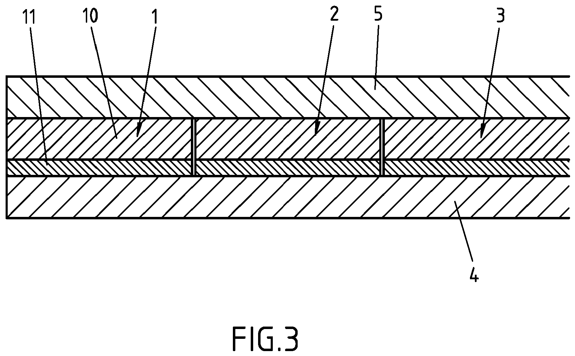

In der Figur 3 ist gezeigt, dass die Kanten der einzelnen Streifen des Klebebands 1, 2 ,3 Stoß an Stoß liegen, also keine Zwischenräume aufweisen. Die einzelnen Klebebandabschnitte 1, 2, 3 bestehen aus einer Trägerschicht 10, auf die eine Klebemassenschicht 11, insbesondere Selbstklebemasse, aufgebracht ist.

Nach dem Verkleben des Klebebands 1 werden die den Körper bildende Materialschichten 5 auf dem Klebeband verteilt.
Anschließend wird eine Dichtfolie 21 so über dem Material 5 mit Hilfe eines zweiten Klebebands 24 fixiert, dass sich ein abgeschlossener Raum ergibt.
In der Figur 2 ist die Schutzfolie 21 nur zur Hälfte gezeigt. Die Schutzfolie 21 wird von dem zweiten Klebeband 24 auf der Form 4 fixiert.

Durch einen Abgang 22 wird die Luft entfernt. Über einen Zugang 23 wird das Harz den Materialschichten 5 zugeführt, bis diese getränkt sind.
Es erfolgt der Aushärtungsprozeß.

Wenn dieser abgeschlossen ist, wird die Dichtfolie 21 entfernt und der fertige Formkörper kann der Form 4 entnommen werden.

## Patentansprüche

1. Verwendung eines Klebebands in einem Verfahren zum Formen eines Körpers in einer Form, umfassend die folgenden Schritte:
• Aufbringen des Klebebands auf der Innenseite einer Form
• Verteilen der den Körper bildende Materialschichten auf dem Klebeband
• Aushärtung der Materialschichten
• Entfernen des Körpers aus der Form
wobei das Klebeband ein Trägermaterial aufweist, umfassend die folgenden Schichten:
ein mit Fluorpolymeren oder Silikonpolymeren beschichtetes Textil aus Fasern mit einem Erweichungspunkt (gemessen nach der in der Beschreibung angegebenen Messmethode) größer/gleich 200 °C, vorzugsweise 250 °C, auf dessen obere Seite vollflächig eine erste Folie aus Fluorpolymeren aufgebracht ist und auf dessen untere Seite vollflächig eine zweite Folie aufgebracht ist,
und wobei auf das Trägermaterial einseitig eine Klebemasse, insbesondere Selbstklebemasse ausgebracht ist.

2. Verwendung eines Klebebands nach Anspruch 1,
**dadurch gekennzeichnet, dass**
die erste Folie zu 50 Gew.-%, weiter vorzugsweise zu 75 Gew.-%, besonders vorzugsweise zu 90 Gew.-%, ganz besonders vorzugsweise zu 95 Gew.-% ein oder mindestens zwei Fluorpolymere (jeweils bezogen auf die Gesamtzusammensetzung der Folie) enthält oder die die erste Folie bildenden Polymere zu 100 Gew.-% aus einem oder mindestens zweien Fluorpolymeren bestehen.

3. Verwendung eines Klebebands nach den Ansprüchen 1 oder 2,
**dadurch gekennzeichnet, dass**
als Fluorpolymere PTFE (Polytetrafluorethylen), ETFE (Poly(ethylen-co-tetrafluoroethylen)), FEP (Poly(tetrafluorethylen-co-hexafluorpropylen)), PVDF (Poly(1,1-difluorethen)) oder PFA (Perfluoralkoxy-Polymere) oder Gemische aus zwei oder mehreren der genannten Fluorpolymere eingesetzt werden.

4. Verwendung eines Klebebands nach zumindest einem der Ansprüche 1 bis 3,
**dadurch gekennzeichnet, dass**
die Fluorpolymere mit weiteren Polymeren vermischt sind wie olefinische Polymere wie Homo- oder Copolymere von Olefinen wie Ethylen, Propylen oder Butylen, Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide.

5. Verwendung eines Klebebands nach zumindest einem der vorherigen Ansprüche,
**dadurch gekennzeichnet, dass**
die Dicke der ersten und/oder der zweiten Folie zwischen 15 und 350 µm, vorzugsweise zwischen 30 und 200 µm, weiter vorzugsweise zwischen 50 und 150 µm liegt.

6. Verwendung eines Klebebands nach zumindest einem der vorherigen Ansprüche,
**dadurch gekennzeichnet, dass**
das Textil ein Gelege oder bevorzugt ein Gewebe ist.

7. Verwendung eines Klebebands nach zumindest einem der vorherigen Ansprüche,
**dadurch gekennzeichnet, dass**
als Fasern für das Textil Kohlenstoff- oder Glasfasern verwendet werden.

8. Verwendung eines Klebebands nach zumindest einem der vorherigen Ansprüche,
**dadurch gekennzeichnet, dass**
als Textil ein Glasfasergewebe eingesetzt wird, das vorzugsweise mit Fluorpolymeren beschichtet ist.

9. Verwendung eines Klebebands nach zumindest einem der vorherigen Ansprüche,
**dadurch gekennzeichnet, dass**
die auf dem Trägermaterial aufgebrachte Klebemasse eine Haftklebemasse, insbesondere auf Acrylat- oder Silikonbasis ist.

10. Verwendung eines Klebebands nach zumindest einem der vorherigen Ansprüche,
**dadurch gekennzeichnet, dass**
der Masseauftrag der Klebemasse auf dem Trägermaterial zwischen 10 und 200 g/m²; vorzugsweise zwischen 20 und 100 g/m², besonders vorzugsweise zwischen 30 und 75 g/m² beträgt.

11. Verwendung eines Klebebands nach Anspruch 1,
**dadurch gekennzeichnet, dass**
vor dem Aufbringen des Klebebands die Innenseite der Form mit einem Trennmittel ausgerüstet wird.

12. Verwendung eines Klebebands nach zumindest einem der Ansprüche 1 oder 11,
**dadurch gekennzeichnet, dass**
das Aushärten der Materialschichten unter Vakuum stattfindet.

## Claims

1. Use of an adhesive tape in a method for moulding a body in a mould, comprising the following steps:
• applying the adhesive tape to the inner side of a mould
• distributing the material layers forming the body over the adhesive tape
• curing the material layers
• removing the body from the mould
wherein the adhesive tape has a carrier material comprising the following layers:
a textile coated with fluoropolymers or silicone polymers and composed of fibres having a softening point (measured by the measuring method specified in the description) of greater than or equal to 200°C, preferably 250°C, to the upper side of which textile a first film composed of fluoropolymers is applied over the whole surface and to the lower side of which textile a second film is applied over the whole surface,
and wherein an adhesive, in particular a self-adhesive, is applied to one side of the carrier material.

2. Use of an adhesive tape according to Claim 1,
**characterized in that**
the first film contains one or at least two fluoropolymers to an extent of 50% by weight, more preferably to an extent of 75% by weight, particularly preferably to an extent of 90% by weight, very particularly preferably to an extent of 95% by weight (in each case based on the total composition of the film), or the polymers forming the first film consist of one or at least two fluoropolymers to an extent of 100% by weight.

3. Use of an adhesive tape according to Claim 1 or 2,
**characterized in that**
the fluoropolymers used are PTFE (polytetrafluoroethylene), ETFE (poly(ethylene-co-tetrafluoroethylene)), FEP (poly(tetrafluoroethylene-co-hexafluoropropylene)), PVDF (poly(1,1-difluoroethene)) or PFA (perfluoralkoxy polymers) or mixtures of two or more of the fluoropolymers mentioned.

4. Use of an adhesive tape according to at least one of Claims 1 to 3,
**characterized in that**
the fluoropolymers are mixed with further polymers, such as olefinic polymers such as homo- or copolymers of olefins such as ethylene, propylene or butylene, polyesters such as, in particular, polyethylene terephthalate (PET), polyamides, polyurethanes, polyoxymethylene, polyvinyl chloride (PVC), polyethylene naphthalate (PEN), ethylene vinyl alcohol (EVOH), polyvinylidene chloride (PVDC), polyvinylidene fluoride (PVDF), polyacrylonitrile (PAN), polycarbonate (PC), polyamide (PA), polyethersulfone (PES), polyimide (PI), polyarylene sulfides and/or polyarylene oxides.

5. Use of an adhesive tape according to at least one of the preceding claims,
**characterized in that**
the thickness of the first and/or second film is between 15 and 350 µm, preferably between 30 and 200 µm, more preferably between 50 and 150 µm.

6. Use of an adhesive tape according to at least one of the preceding claims,
**characterized in that**
the textile is a laid scrim or preferably a woven fabric.

7. Use of an adhesive tape according to at least one of the preceding claims,
**characterized in that**
the fibres used for the textile are carbon fibres or glass fibres.

8. Use of an adhesive tape according to at least one of the preceding claims,
**characterized in that**
the textile used is a glass fibre woven fabric which has preferably been coated with fluoropolymers.

9. Use of an adhesive tape according to at least one of the preceding claims,
**characterized in that**
the adhesive applied to the carrier material is a pressure-sensitive adhesive, in particular based on acrylate or silicone.

10. Use of an adhesive tape according to at least one of the preceding claims,
**characterized in that**
the coat weight of the adhesive on the carrier material is between 10 and 200 g/m², preferably between 20 and 100 g/m², particularly preferably between 30 and 75 g/m².

11. Use of an adhesive tape according to Claim 1,
**characterized in that**
the inner side of the mould is provided with a release agent prior to application of the adhesive tape.

12. Use of an adhesive tape according to at least one of Claims 1 and 11,
**characterized in that**
the material layers are cured under vacuum.

## Revendications

1. Utilisation d'un ruban adhésif dans un procédé pour le moulage d'un corps dans un moule, comprenant les étapes suivantes :
• application du ruban adhésif sur la face interne d'un moule
• répartition sur le ruban adhésif des couches de matériau constituant le corps
• durcissement des couches de matériau
• enlèvement du corps hors du moule
dans laquelle le ruban adhésif comporte un matériau de support comprenant les couches suivantes :
un textile revêtu avec des polymères fluorés ou des polymères silicone, à base de fibres ayant un point de ramollissement (mesuré selon la méthode de mesure indiquée dans la description) supérieur/égal à 200 °C,
de préférence 250 °C, sur la face supérieure duquel est appliqué sur toute la surface un premier film à base de polymères fluorés et sur la face inférieure duquel est appliqué sur toute la surface un second film,
et dans laquelle une matière adhésive, en particulier une matière autoadhésive, est appliquée d'un côté sur le matériau de support.

2. Utilisation d'un ruban adhésif selon la revendication 1,
**caractérisée en ce que**
le premier film contient à raison de 50 % en poids, encore mieux à raison de 75 % en poids, de façon particulièrement préférée à raison de 90 % en poids, de façon tout particulièrement préférée à raison de 95 % en poids un ou au moins deux polymères fluorés (chaque fois par rapport à la composition totale du film) ou les polymères constituant le premier film consistent à raison de 100 % en poids en un ou au moins deux polymères fluorés.

3. Utilisation d'un ruban adhésif selon la revendication 1 ou 2,
**caractérisée en ce**
**qu'**on utilise comme polymères fluorés du PTFE (polytétrafluoroéthylène), de l'ETFE (copolymère éthylène/tétrafluoroéthylène), du FEP (copolymère tétrafluoroéthylène/hexafluoropropylène), du PVDF (poly(1,1-difluoroéthène)) ou des PFA (polymères perfluoroalcoxy) ou des mélanges de deux ou plus de deux ou des polymères fluorés cités.

4. Utilisation d'un ruban adhésif selon au moins l'une quelconque des revendications 1 à 3,
**caractérisée en ce que**
les polymères fluorés sont mélangés avec d'autres polymères tels que des polymères oléfiniques tels que des homopolymères ou copolymères d'oléfines telles que l'éthylène, le propylène ou le butylène, des polyesters tels qu'en particulier le poly(éthylène téréphtalate) (PET), les polyamides, les polyuréthanes, le polyoxyméthylène, le poly(chlorure de vinyle) (PVC), le poly(éthylène naphtalate) (PEN), l'éthylène/alcool vinylique (EVOH), le poly(chlorure de vinylidène) (PVDC), le poly(fluorure de vinylidène) (PVDF), le polyacrylonitrile (PAN), le polycarbonate (PC), le polyamide (PA), la polyéthersulfone (PES), le polyimide (PI), les poly(sulfure d'arylène)s et/ou les poly(oxyde d'arylène)s.

5. Utilisation d'un ruban adhésif selon au moins l'une quelconque des revendications précédentes,
**caractérisée en ce que**
l'épaisseur du premier et/ou du second film est comprise entre 15 et 350 µm, de préférence entre 30 et 200 µm, de façon plus particulièrement préférée entre 50 et 150 µm.

6. Utilisation d'un ruban adhésif selon au moins l'une quelconque des revendications précédentes,
**caractérisée en ce que**
le textile est une nappe ou de préférence un tissu.

7. Utilisation d'un ruban adhésif selon au moins l'une quelconque des revendications précédentes,
**caractérisée en ce**
**qu'**on utilise comme fibres pour le textile des fibres de carbone ou de verre.

8. Utilisation d'un ruban adhésif selon au moins l'une quelconque des revendications précédentes,
**caractérisée en ce**
**qu'**on utilise comme textile un tissu de fibres de verre qui est revêtu de préférence avec des polymères fluorés.

9. Utilisation d'un ruban adhésif selon au moins l'une quelconque des revendications précédentes,
**caractérisée en ce que**
la matière adhésive appliquée sur le matériau de support est une matière autoadhésive, en particulier à base d'acrylate ou de silicone.

10. Utilisation d'un ruban adhésif selon au moins l'une quelconque des revendications précédentes,
**caractérisée en ce que**
l'application de masse de la matière adhésive sur le matériau de support est comprise entre 10 et 200 g/m², de préférence entre 20 et 100 g/m², de façon particulièrement préférée entre 30 et 75 g/m².

11. Utilisation d'un ruban adhésif selon la revendication 1,
**caractérisée en ce**
**qu'**avant l'application du ruban adhésif on munit d'un agent de démoulage la face interne du moule.

12. Utilisation d'un ruban adhésif selon au moins l'une quelconque des revendications 1 et 11,
**caractérisée en ce que**
le durcissement des couches de matériau a lieu sous vide.
